# EUROPÄISCHE PATENTSCHRIFT

(11) **EP 2 614 033 B1**
(45) Veröffentlichungstag und Bekanntmachung des Hinweises auf die Patenterteilung: **07.11.2018**
(21) Anmeldenummer: 11755263.8
(22) Anmeldetag: 20.08.2011
(51) Int. Cl.: C01B 3/34, C01B 3/38, C01B 3/48, F01K 23/10

(54) **VERFAHREN UND VORRICHTUNG ZUR ERZEUGUNG VON PROZESSDAMPF UND KESSELSPEISEWASSERDAMPF IN EINEM BEHEIZBAREN REFORMIERREAKTOR ZUR HERSTELLUNG VON SYNTHESEGAS**
METHOD AND DEVICE FOR PRODUCING PROCESS VAPOR AND BOILER FEED STEAM IN A HEATABLE REFORMING REACTOR FOR PRODUCING SYNTHESIS GAS
PROCÉDÉ ET DISPOSITIF DE PRODUCTION DE VAPEUR DE PROCESSUS ET DE VAPEUR D'EAU D'ALIMENTATION DE CHAUDIÈRE DANS UN RÉACTEUR DE REFORMAGE CHAUFFANT POUR LA PRODUCTION DE GAZ DE SYNTHÈSE

(30) Priorität: 10.09.2010 DE 102010044939
(43) Veröffentlichungstag der Anmeldung: 17.07.2013
(73) Patentinhaber: thyssenkrupp Industrial Solutions AG, 45143 Essen (DE)
(72) Erfinder: VON TROTHA, Thilo, 59379 Selm (DE); HEINRICH, Jan, 82065 Baierbrunn/Buchenhain (DE)
(74) Vertreter: thyssenkrupp Intellectual Property GmbH
(86) Internationale Anmeldenummer: PCT/EP2011/004205
(87) Internationale Veröffentlichungsnummer: WO 2012/031683

(56) Entgegenhaltungen:
- EP-A2- 1 849 748
- WO-A1-2010/051900
- FR-A1- 2 892 496
- US-A- 3 361 534
- US-A- 4 725 380
- US-A1- 2005 288 381
- US-A1- 2009 232 729

## Beschreibung

Die Erfindung betrifft ein Verfahren zur Erzeugung von Prozessdampf und Kesselspeisewasserdampf in einem beheizbaren Reformierreaktor zur Herstellung von Synthesegas. Durch das erfindungsgemäße Verfahren lässt sich die fühlbare Wärme eines aus Kohlenwasserstoffen und Wasserdampf erzeugten Synthesegases nutzen, so dass man zwei Sorten von Dampf erhält, welche jeweils beim Erhitzen und Verdampfen von Kesselspeisewasser und Prozesskondensat erzeugt werden, und wobei das Verfahren auch eine Konvertierung des in dem Synthesegas enthaltenen Kohlenmonoxids vornimmt, und wobei das Verfahren eine optionale Aufheizung des Kesselspeisewassers mit dem Rauchgas aus der Beheizung des Reformierreaktors vornimmt. Durch das Verfahren lässt sich die fühlbare Wärme des Synthesegases und des aus der Beheizung stammenden Rauchgases effizienter nutzen, wobei die Nachteile aus der Rauchgasbeheizung, die durch das schwankende Wärmeangebot im Rauchgaskanal verursacht werden, vermieden werden. Die Erfindung betrifft auch eine Anlage, mit der dieses Verfahren ausführbar ist.

Eine Möglichkeit zur Herstellung von Synthesegas besteht in der katalytischen Umsetzung von gasförmigen oder verdampften Kohlenwasserstoffen mit Wasserdampf in einem beheizbaren Reformierreaktor, wobei die Beheizung durch Verbrennung eines Heizgases mit einem sauerstoffhaltigen Gas erfolgt. Das Synthesegas besitzt nach der Erzeugung eine Temperatur von etwa 800 °C bis etwa 900 °C. Die fühlbare Wärme des erhaltenen Synthesegases kann daher zur Dampferzeugung genutzt werden. Bei der Beheizung erhält man ein Rauchgas, welches ebenfalls eine fühlbare Wärme besitzt, die ebenfalls zur Dampferzeugung genutzt werden kann. Der Dampf wiederum kann zum Antrieb von Hilfsaggregaten oder einer Dampfturbine genutzt werden.

Zur Dampferzeugung kann das Prozesskondensat als Speisewasser genutzt werden, welches kondensiertes Wasser darstellt, das sich beim Herunterkühlen des Synthesegases bildet. Dieses Prozesskondensat besitzt jedoch den Nachteil, dass die in dem Synthesegas enthaltenen Fremdstoffe darin wiederzufinden sind. Diese Stoffe besitzen häufig eine unerwünschte korrosive Wirkung, so dass der Dampf nicht uneingeschränkt für alle Zwecke nutzbar ist. Dieser Dampf wird deshalb in der Regel als Ausgangsdampf für die Reformierreaktion genutzt.

Auch reicht die Menge an Dampf aus dem Prozesskondensat in der Regel nicht aus, um alle Nebenaggregate zu betreiben, für die man häufig auf eine gleichbleibende Menge an Dampf angewiesen ist. Zur Abhilfe lässt sich zusätzlicher Dampf erzeugen, welcher aus sauberem Kesselspeisewasser erzeugt wird. Dieser Dampf enthält keine Fremdstoffe, so dass dieser auch die strengen Anforderungen erfüllt, die an den Betrieb von Dampfturbinen gestellt werden. Man erhält also zwei Sorten an Dampf.

Der Betrieb von zwei Dampfsystemen besitzt große Vorteile. So lässt sich der Dampf aus dem Prozesskondensat beispielsweise mit Dampf aus dem Kesselwasser mischen, um stets eine ausreichende Menge an Dampf für die Synthesegaserzeugung bereitstellen zu können oder um die Zusammensetzung des Dampfes je nach Reinheitsanforderung für den Einsatz oder die weitere Verwendung zu beeinflussen.

Der Dampf aus dem Kesselspeisewasser kann nicht nur zum Betrieb von Hilfsaggregaten oder Dampfturbinen genutzt werden, er kann auch exportiert werden oder als Einsatzdampf für die Herstellung des Synthesegases genutzt werden. Der Dampf aus dem Kesselspeisewasser kann beispielsweise durch Erhitzen des Kesselspeisewassers mit dem Prozessgas, welches frisch erzeugtes Synthesegas bei hoher Temperatur darstellt, erzeugt werden. Auch der Dampf aus dem Prozesskondensat, welches aus dem Synthesegas auskondensiertes Wasser darstellt, kann durch Erhitzen des Prozesskondensates mit Synthesegas erzeugt werden. Dabei geht man typischerweise so vor, dass das Kesselspeisewasser oder das Prozesskondensat zunächst in einem Vorerhitzer, welcher als Wärmetauscher geartet ist, erhitzt wird, und das erhitzte Wasser dann in einem Dampferzeuger verdampft wird. Der Dampferzeuger lässt sich beispielhaft als Dampftrommel konstruieren, welche mit stoffdurchströmten Wärmeaustauschschlangen durch das Synthesegas erhitzt wird.

Die WO 2010051900 A1 lehrt ein Verfahren und eine Vorrichtung zur Wärmeausnutzung bei der Dampfreformierung kohlenwasserstoffhaltiger Ausgangsstoffe mittels Dampf, in welcher in einem Dampfreformer ein Synthesegas erzeugt wird, das eine Wärmemenge enthält, umfassend mindestens sechs Wärmetauscher, eine Wasseraufbereitungseinheit, eine Kühlstrecke, eine Hochtemperaturkonversionseinheit, mindestens zwei Einheiten zur Druckerhöhung, mindestens einen Verbraucher und mindestens eine Einheit zur weiteren Verarbeitung des resultierenden Synthesegases, wobei das generierte, die erste Wärmemenge enthaltende Synthesegas, zunächst die Hochtemperaturkonversionseinheit passiert, in der es größtenteils zu Kohlendioxid und Wasserstoff umgesetzt wird, und das resultierende Wärme-enthaltende Synthesegas zum weiteren Wärmetransfer in einen ersten Wärmetauscher geleitet wird, und im Folgenden mindestens zwei weitere Wärmetauscher durchläuft, die als Kesselspeisewasservorwärmer, Produktkondensatwärmetauscher oder Niederdruckverdampfer betrieben werden, und die in beliebiger Abfolge in Reihe hintereinandergeschaltet sind, wobei das Synthesegas, das aus dem Niederdruckverdampfer resultiert, zunächst in einen weiteren Kesselspeisewasservorwärmer geleitet wird, indem Wärmeenergie auf einen Teilstrom des Kesselspeisewassers aus der Wasseraufbereitungseinheit übertragen wird, wonach das resultierende Synthesegas die Kühlstrecke passiert, in der das Synthesegas weiter abgekühlt wird und ein Kondensatstrom erzeugt wird, und das resultierende Synthesegas abschließend durch mindestens eine Einheit zur weiteren Verarbeitung geleitet wird. Das Verfahren lehrt keine Möglichkeit, die Wärme des Synthesegases vor der Hochtemperaturkonversionseinheit zu nutzen.

Zur Herstellung des Dampfes aus Prozesskondensat kann auch die fühlbare Wärme des Rauchgases verwendet werden. Die US 2009242841 A1 lehrt ein Verfahren zur Erzeugung von Synthesegas, wobei das Synthesegas durch Dampfreformierung in einem Reformierreaktor erzeugt wird, mit einem Verbrennungsluftstrom, einer Konvektionszone, und einem Rauchgasstrom, und das Verfahren den Verfahrensschritt Durchströmen der Verbrennungsluft durch ein Vorwärmeaustauschersystem in der Konvektionszone umfasst, um die Verbrennungsluft in indirektem Wärmeaustausch mit dem Rauchgas zu erhitzen, wobei die Temperatur der vorerhitzten Verbrennungsluft zwischen etwa 93 °C (200 °F) und 204 °C (400 °F) beträgt. In einer Ausführungsform des Verfahrens wird Kesselspeisewasser dadurch erhitzt, dass dieses entweder nacheinander oder parallel mit der zu erhitzenden Verbrennungsluft durch die Kühlungsstufe für das Synthesegas und durch die Konvektionszone für die Verbrennungsluft, welche durch den Rauchgasstrom beheizt wird, geleitet und erhitzt wird.

Für die Beheizung des Kesselspeisewassers oder des Prozesskondensates durch das Rauchgas muss im Teillastfall in der Regel bei gleichbleibendem Mengenfluß an Prozesskondensat oder Kesselspeisewasser eine Anpassung des Wärmeangebots im Rauchgaskanal vorgenommen werden, um eine Verdampfung des Wassers sicherzustellen. Dies bedeutet, dass zumindest zeitweise beispielsweise durch Hilfsbrenner ein zusätzliches Wärmeangebot bereitgestellt werden muss. Dies ist mit erhöhten Betriebskosten verbunden.

Da das Zweidampfsystem jedoch die genannten Vorteile besitzt, wird nach Möglichkeiten gesucht, dieses weiter zu verbessern. Ein Ansatzpunkt zur Verbesserung der Effizienz des Zweidampfprozesses ist die Überbrückung des Wärmetauschers im Rauchgaskanal für die Zeitdauer, in der ein ungenügendes Wärmeangebot im Rauchgaskanal bereitsteht. Dadurch ist der Betrieb von zusätzlichen Brennern zum Heizen des Rauchgaskanals überflüssig.

Es ist möglich, das Prozesskondensat durch die Abwärme des Rauchgaskanals zu erhitzen. Da das Prozesskondensat jedoch in der Regel nicht auf die Temperaturen des kühlen Kesselspeisewassers gekühlt wird, ist dieses höher temperiert als das kühle Kesselspeisewasser. Aufgrund der geringeren Temperaturdifferenz zum Rauchgas werden für die Wärmetauscher des Prozesskondensates im Rauchgaskanal nach dem Newton'schen Abkühlungsgesetz deshalb größere Wärmetauscherflächen benötigt. Da die Temperaturdifferenz des Prozesskondensates zum heißen Synthesegas höher ist, werden in der Prozessgasleitung hinter dem Reformierreaktor deutlich kleinere Wärmeaustauscherflächen benötigt als im Rauchgaskanal. Da weiterhin die Wassergas-Shift-Reaktion bei deutlich niedrigeren Temperaturen abläuft, als die Synthesegaserzeugung, lässt sich die Wärme der Synthesegaserzeugung unmittelbar nach dem Austritt aus dem Reformierreaktor für das Prozesskondensat besser nutzen, da hier eine wesentlich höhere Temperatur als hinter der Konvertierungseinheit herrscht. Kleinere Wärmeaustauschflächen wiederum bedingen eine bessere Wirtschaftlichkeit des Verfahrens.

Es besteht deshalb die Aufgabe, ein Verfahren zur Verfügung zu stellen, welches die Wärme des Synthesegases vor der Konvertierung des Kohlenmonoxids zum Verdampfen des Prozesskondensates nutzt. Das Verfahren soll es zudem ermöglichen, die Abhängigkeit von dem schwankenden Wärmeangebot im Rauchgaskanal zu verringern. Durch diese Maßnahmen sollen die Vorteile des Zweidampf-Systems weiter genutzt werden können und die Wirtschaftlichkeit der Dampferzeugung in Reformierreaktoren verbessert werden.

Die Erfindung löst diese Aufgabe durch ein Verfahren, welches einen zusätzlichen Dampferzeuger, der sich vor der Konvertierungseinheit für das Kohlenmonoxid befindet, zur Dampferzeugung aus Prozesskondensat nutzt. Da die Erzeugung von Dampf aus Kesselspeisewasser vor der Konvertierungseinheit bereits genutzt wird, bietet sich die zusätzliche Erzeugung von Dampf aus Prozesskondensat an dieser Stelle an. Damit lässt sich eine permanente Erzeugung von Dampf aus Prozesskondensat durch den Rauchgaskanal ersetzen.

Bisher wird bei der Abkühlung des Prozessgases vom Reformeraustritt auf die Eintrittstemperatur der Wasser-Shift-Reaktion typischerweise Kesselspeisewasser verdampft. Andere Beispiele zeigen, dass ein Teil der Wärme auch genutzt wird, um Einsatzstoffe vorzuwärmen. So kann beispielsweise das Erdgas oder das Einsatzgemisch für die Reformierreaktion genutzt werden. Bei der vorliegenden Erfindung wird jetzt zusätzlich Prozesskondensat zwischen Reformeraustritt und Eintritt Wassergas-Shift-Reaktion verdampft. Hierdurch gelingt es vorteilhaft, Prozesskondensat durch Prozessgas zu verdampfen. Damit kann die Verdampfung des Prozesskondensates im Rauchgaskanal ganz oder teilweise entfallen. Da die Temperaturdifferenz des Prozesskondensates zum heißen Synthesegas vor der CO-Konvertierung relativ hoch ist, werden hierfür deutlich kleinere Wärmetauschtauaschflächen benötigt als im Rauchgaskanal. Dies wiederum hat eine verbesserte Wirtschaftlichkeit des Prozesses zur Folge.

Vor der Erhitzung des Prozesskondensates im Rauchgaskanal wird vorteilhaft eine Erhitzung des Kesselspeisewassers durchgeführt, da dieses kühler ist und aufgrund der verkleinerten Wärmeaustauschflächen weniger Kontaktfläche mit dem korrosiven Synthesegas erforderlich ist. Dies wiederum bedingt ebenfalls eine verbesserte Wirtschaftlichkeit des Prozesses.

Je nach Auslastung der Anlage kann der Rauchgaskanal zur Erzeugung von Dampf aus Kesselspeisewasser genutzt werden. Dabei kann die Wärmeübertragung aus dem Rauchgas überbrückt werden. Hierzu werden die Rohrschlangen, in denen das Kesselspeisewasser durch den Rauchgaskanal fließt, für die Zeitdauer, in der ein ungenügendes Wärmeangebot im Rauchgaskanal zur Verfügung steht, überbrückt. Dadurch lässt sich auch der Wärmetauscher im Rauchgaskanal preisgünstiger gestalten, da kleinere Wärmeaustauschflächen benötigt werden, wenn die Temperaturdifferenzen im Rauchgaskanal keine wirtschaftliche Beheizung mehr ermöglichen. Bei dieser Vorgehensweise kann auch ein Teil des Kesselspeisewassers oder zusätzliches Kesselspeisewasser in dem Rauchgaskanal erhitzt werden. Durch die Verwendung von kaltem Kesselspeisewasser ist aufgrund der höheren Temperaturdifferenz zum Rauchgas ein besserer Wärmeaustausch möglich.

Beansprucht wird insbesondere ein Verfahren zur Erzeugung von Prozessdampf und Kesselspeisewasserdampf in einem beheizbaren Reformierreaktor zur Herstellung von Synthesegas, wobei
- das Verfahren Synthesegas durch Dampfreformierung aus Kohlenwasserstoffen und Dampf bereitstellt, welches durch Verbrennung eines Heizgases mit einem sauerstoffhaltigen Gas beheizt wird, und das erzeugte Synthesegas nach der Abkühlung durch eine Reihe von Wärmetauschern und eine Abkühlungsstrecke auskondensiert wird, so dass man neben dem getrockneten Synthesegas ein Prozesskondensat erhält, und
- das Verfahren auch eine Konvertierung wenigstens eines Teiles des erzeugten Kohlenmonoxids mit Wasserdampf zu Kohlendioxid und Wasserstoff vornimmt, und
- der Dampf in zwei verschiedenen Sorten bereitgestellt wird, welche aus der Verdampfung von Kesselspeisewasser und der Verdampfung von Prozesskondensat erzeugt werden, und
- das Kesselspeisewasser über einen Vorerhitzer, der sich im Gasfluß hinter der Konvertierungseinheit befindet, mit dem Synthesegas erhitzt wird, und das Kesselspeisewasser dann über einen Dampferzeuger, der sich im Gasfluß vor der Konvertierungseinheit befindet, verdampft wird, und
- das Prozesskondensat durch einen Wärmetauscher und einen Vorerhitzer, die sich im Gasfluß hinter der Konvertierungseinheit befinden, erhitzt wird,
und weiches dadurch gekennzeichnet ist, dass
- das Prozesskondensat durch einen zusätzlichen Dampferzeuger, der sich vor der Konvertierungseinheit befindet, verdampft wird.

Um auch das Rauchgas zum Erhitzen von Kesselspeisewasser nutzen zu können, kann die Leitung für das flüssige Kesselspeisewasser durch den Rauchgaskanal führen, wobei das Kesselspeisewasser permanent oder zeitweise über einen zusätzlichen Wärmetauscher mit dem Rauchgas erhitzt wird. Hierzu befinden sich in der Zuführung für das Kesselspeisewasser in den Wärmetauscher des Rauchgaskanals Rohrweichen, durch die sich der Wärmetauscher überbrücken lässt. Dies wird beispielsweise bei einem ungenügenden Wärmeangebot im Rauchgaskanal vorgenommen.

Da die Wirtschaftlichkeit des Prozesses vor allem von der Anpassung der Dampferzeugungsleistung an den Dampfbedarf abhängt, lässt sich die die Dampferzeugung aller Dampferzeuger im System in einer vorteilhaften Ausführungsform des Verfahrens regeln. Dies kann beispielhaft dadurch geschehen, dass die Dampferzeugungsleistung aus Kesselspeisewasser durch eine Temperaturregelung des Dampferzeugers für Kesselspeisewasser geregelt wird. Dies kann aber auch durch Regelung des Wärmeumlaufs im Dampferzeuger durch Ventile oder Pumpen geschehen.

Auch die Dampferzeugungsleistung aus Prozesskondensat lässt sich in einer vorteilhaften Ausführungsform des Verfahrens regeln. Dies kann ebenfalls dadurch geschehen, dass die Dampferzeugungsleistung aus Prozesskondensat durch eine Temperaturregelung des Dampferzeugers für Prozesskondensat geregelt wird. Dies kann aber auch durch Regelung des Wärmeumlaufs im Dampferzeuger durch Ventile oder Pumpen geschehen. Grundsätzlich ist eine Regelung der Dampferzeugung aus Prozesskondensat jedoch schwieriger durchzuführen, da die zur Verfügung stehende Menge an Prozesskondensat an die Produktion von Synthesegas gekoppelt ist.

In einer weiteren Ausführungsform des erfindungsgemäßen Verfahrens ist es auch möglich, dass sowohl die Dampferzeugungsleistung aus Kesselspeisewasser und die Dampferzeugungsleistung aus Prozesskondensat durch eine Temperaturregelung der Dampferzeuger geregelt werden. Selbstverständlich können beide Dampfsorten je nach Anforderung gemischt oder gegeneinander verschnitten werden.

Die beiden Dampferzeuger für das Kesselspeisewasser und das Prozesskondensat im Synthesegasfluss hinter dem Reformierreaktor können mit "Bypass"-Rohrleitungen ausgestattet sein, die eine Regelung des Synthesegasstroms durch die Dampferzeuger ermöglichen. Es ist ebenfalls möglich, vor oder direkt hinter der CO-Konvertierung noch Wärmetauscher für zu erhitzendes kohlenwasserstoffhaltiges Ausgangsgemisch für den Reformierreaktor vorzusehen.

Das Verfahren kann weiterhin so gestaltet werden, dass der Dampferzeuger für Prozesskondensat vor der CO-Konvertierung ein Kettlereboiler ist. Es kann auch so gestaltet werden, dass der Wärmetauscher für Prozesskondensat hinter der Wassergas-Shift-Reaktion ein Kettlereboiler ist. Dadurch lässt sich das Synthesegas in der Temperatur regeln. Auch ist es möglich, den Synthesegasstrom vor und hinter der CO-Konvertierung durch einen einzelnen Kettlereboiler mit durch diesen führenden Rohrschlangen zu leiten. Dadurch lässt sich die Anordnung der Prozesskondensatverdampfung platzsparend gestalten. Die Anwendung der einzelnen Kettlereboiler und deren zeitliche Dauer bleiben dabei dem ausführenden Fachmann überlassen. Damit lässt sich eine Temperaturregelung für den Synthesegasstrom ausführen, die unabhängig von der Rauch- und Synthesegasproduktion ist. Unter Synthesegas fällt selbstverständlich auch ein stark wasserstoffhaltiges Gas, je nach Grad der CO-Konvertierung.

Beansprucht wird auch eine Vorrichtung, mit der das genannte Verfahren ausführbar ist. Beansprucht wird insbesondere eine Vorrichtung zur Erzeugung von Prozessdampf und Kesselspeisewasserdampf in einem beheizbaren Reformierreaktor zur Herstellung von Synthesegas, umfassend
- einen beheizbaren Reformierreaktor zur Herstellung von Synthesegas aus Kohlenwasserstoffen und Wasserdampf,
- eine Konvertierungseinheit für die Konvertierung von Kohlenmonoxid mit Wasserdampf zu Kohlendioxid,
- eine Abkühlungsstrecke zur Kondensation von Prozesswasser,
- zwei Vorerhitzer zum Erhitzen des Kesselspeisewassers und des Prozesskondensates mit Synthesegas,
- einen zusätzlichen Wärmetauscher zum Erhitzen des Prozesskondensates mit Synthesegas, der in Gasflußrichtung des Synthesegases direkt hinter der Konvertierungseinheit sitzt,
- einen Dampferzeuger, der in Gasflußrichtung des Synthesegases vor der Konvertierungseinheit sitzt, wobei dieser zur Erzeugung von Dampf aus Kesselspeisewasser dient,
und welche dadurch gekennzeichnet ist, dass
- die Vorrichtung einen Dampferzeuger enthält, der in Gasflußrichtung des Synthesegases vor der Konvertierungseinheit sitzt, wobei dieser zur Erzeugung von Dampf aus Prozesskondensat dient.

Die Vorrichtung kann einen zusätzlichen Wärmetauscher zum Erhitzen von Kesselspeisewasser im Rauchgaskanal umfassen. Dadurch lässt sich der der Rauchgaskanal auch zum Erhitzen von Kesselspeisewasser nutzen. Dieser ist in einer Ausführungsform der Erfindung absperrbar, so dass das Kesselspeisewasser direkt und ohne weiteres Durchströmen des Rauchgaskanals in den hierfür vorgesehenen Dampferzeuger strömt. Auf diese Weise lässt sich der Wärmetauscher im Rauchgaskanal überbrücken, so dass dieser nicht durchströmt wird. Das Kesselspeisewasser fließt dann direkt in den dafür vorgesehenen Dampferzeuger.

Die Dampferzeuger können eine Ausführungsform besitzen, wie sie im Stand der Technik üblich ist. Diese können in einer beispielhaften Ausführungsform als Dampftrommel geartet sein, welche über Wärmeaustauschschlangen mit dem Gas erhitzt wird. Der Dampferzeuger kann als normaler Dampfkessel mit Naturumlauf ausgeführt werden, als auch mit Konvektionseinheiten, Pumpen oder Reboilern ausgestattet sein.

In einer Ausführungsform der Erfindung ist die Synthesegasleitung mit einer absperrbaren Rohrleitung ausgestattet ist, die eine regelbare Umgehung des Dampferzeugers für das Kesselspeisewasser in Gasflussrichtung vor der CO-Konvertierung ermöglicht ("Bypass"-Rohrleitung). Dadurch lässt sich der Anteil an Synthesegas regeln, der durch den Wärmetauscher für das Kesselspeisewasser strömt. In einer weiteren Ausführungsform der Erfindung ist die Synthesegasleitung mit einer absperrbaren Rohrleitung ausgestattet, die eine regelbare Umgehung des Dampferzeugers für das Prozesskondensat in Gasflussrichtung vor der CO-Konvertierung ermöglicht. Dadurch lässt sich auch der Anteil an Synthesegas regeln, der durch den Wärmetauscher für das Prozesskondensat strömt. Es können auch beide Umgehungsleitungen installiert sein und beide Leitungen genutzt werden.

Die Dampferzeuger für Kesselspeisewasser und Prozesskondensat können austauschbar sein, obwohl sich der Dampferzeuger für Kesselspeisewasser in einer bevorzugten Ausführungsform direkt hinter dem Reformierreaktor befindet.

In einer Ausführungsform der Erfindung ist der Dampferzeuger in der Synthesegasleitung vor der CO-Konvertierung ein Kettlereboiler. In einer weiteren Ausführungsform ist der Wärmetauscher in der Synthesegasleitung hinter der CO-Konvertierung ein Kettlereboiler. Die Synthesegasleitung kann aber auch sowohl vor als auch hinter der CO-Konvertierung Kettlereboiler enthalten. Ex ist auch möglich, einen Kettlereboiler zu verwenden, dessen Wärmeaustauschschlangen das Synthesegas aus dem Gasfluß sowohl vor der CO-Konvertierung als auch hinter der CO-Konvertierung durchleiten. Ein solcher Kettlereboiler führt eine gleichzeitige Erwärmung des Synthesegases vor und hinter der CO-Konvertierung durch. In einem solchen Fall kann die Dampftrommel für das Prozesskondensat beispielhaft entfallen. Die Kettlereboiler können in den genannten Anordnungen auch mehrfach vorhanden sein. Der oder die Kettlereboiler oder Reboiler können sowohl einfach als auch mehrfach vorhanden sein. Kettlereboiler sind im Stand der Technik bekannt und gehören zu den gängigen Ausführungsformen für Boiler oder Reboiler.

In einer weiteren möglichen Ausführungsform der Erfindung sind beide Dampferzeuger zur Erzeugung von Dampf aus Kesselspeisewasser und Prozesskondensat in der Temperatur regelbar. Dies kann durch beliebige Vorrichtungen erfolgen. Die Anlage umfasst typischerweise auch Vorerhitzer für das Kesselspeisewasser und das Prozesskondensat. Diese sind typischerweise als Wärmetauscher geartet und können ebenfalls in beliebiger Anzahl und Reihenfolge vorhanden sein.

In einer weiteren Ausführungsform befindet sich zwischen den Vorerhitzern für das Kesselspeisewasser und das Prozesskondensat mit dem Synthesegas eine Einheit zur Niedertemperatur-CO-Konvertierung durch Wassergas-Shift-Reaktion, um auch die Reaktionswärme dieser CO-Konvertierung nutzen zu können.

Die erfindungsgemäße Vorrichtung kann ferner an jeder Stelle Teile enthalten, die zum üblichen Betrieb eines Dampfreformierreaktors erforderlich sind. Dies sind beispielhaft Heizer, Thermostate, Kühler, Kompressoren, Druckminderer, Entspannungsvorrichtungen, oder Pumpen. Diese sind dem Fachmann zur Herstellung solcher Anlagen bekannt.

Die Erfindung besitzt den Vorteil, die fühlbare Wärme eines Synthesegases auch vor einer Hochtemperaturkonversionsheit für Kohlenmonoxid eines Dampfreformierreaktors zu nutzen. Die Erfindung besitzt ferner den Vorteil, unter Aufrechterhaltung des Zweidampfsystems sowohl Dampf aus Kesselspeisewasser bereitzustellen, welches sowohl durch Synthesegas und durch Rauchgas aus der Beheizung erhitzt wird, als auch aus Prozesskondensat zu erzeugen, ohne dass eine Anpassung des Wärmeangebotes im Rauchgaskanal vorgenommen werden muss. Damit ist man unabhängiger von den Abnehmern von Dampf in Bezug auf die abgenommene Dampfmenge.

Die Erfindung wird anhand von drei Zeichnungen dargestellt. FIG. 1 stellt eine Anlage mit Prozessfluß aus dem Stand der Technik dar. FIG. 2 zeigt eine erfindungsgemäße Anlage mit Prozessfluß, welche nur eine beispielhafte Ausführungsform darstellt, auf die die Erfindung nicht beschränkt ist. FIG. 3 zeigt die gleiche Ausführungsform, in der der Dampferzeuger und der Wärmetauscher für das Prozesskondensat gegen einen Kettlereboiler ausgetauscht wurde.

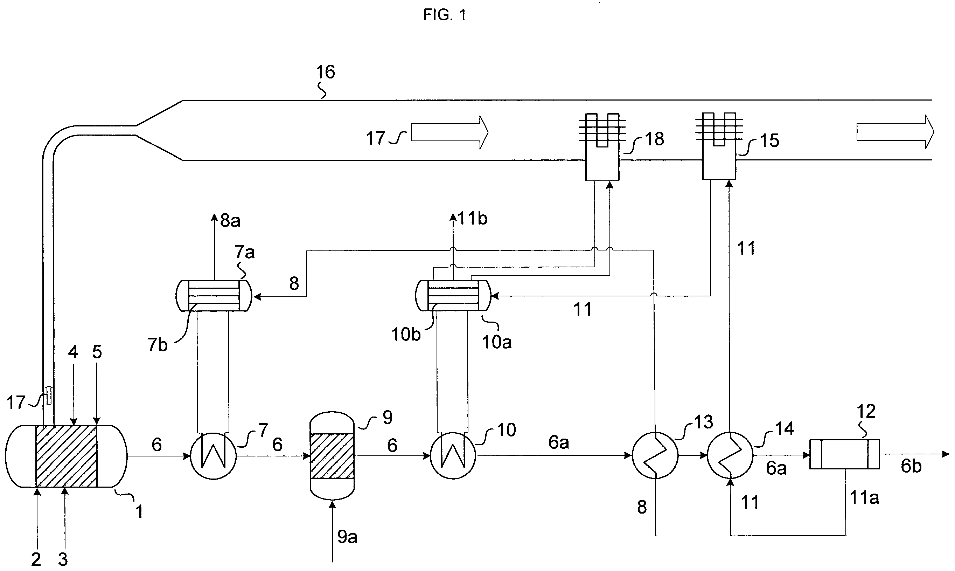

FIG. 1 zeigt eine Vorrichtung aus dem Stand der Technik, welche einen Reformierreaktor (**1**) zur Dampfreformierung von Kohlenwasserstoffen beinhaltet. Dieser wird mit einem Kohlenwasserstoff (**2**) und Wasserdampf (**3**) zur Reformierung betrieben. Die Beheizung erfolgt mit einem Heizgas (**4**) und einem sauerstoffhaltigen Gas (**5**). Das erhaltene Synthesegas (**6**) besitzt eine Temperatur von ca. 800 °C bis 900 °C und wird zur Kühlung durch einen Wärmetauscher (**7**) geführt, der einen Dampferzeuger (**7a**) für Kesselspeisewasser (**8**) beheizt. Der Dampferzeuger (**7**) für Kesselspeisewasser (**8**) ist in dieser Ausführungsform als Dampftrommel (**7b**) geartet. Das Synthesegas (**6**) strömt dann in eine Hochtemperaturkonvertierungseinheit (**9**), in der das darin enthaltene Kohlenmonoxid (CO) mit Wasserdampf (H₂O, **9a**) in Kohlendioxid (CO₂) und Wasserstoff umgewandelt wird. Das konvertierte Synthesegas (**6**) strömt dann in einen weiteren Wärmetauscher (**10**), der einen Dampferzeuger (**10a**) für Prozesskondensat (**11**) beheizt. Dieser ist in dieser Ausführungsform ebenfalls als Dampftrommel (**10b**) geartet. das Prozesskondensat (**11**) stammt aus der Abkühlungsstrecke (**12**) für das Synthesegas (**6a**). Das nach Durchströmen der Wärmetauscher (**7,10**) für die Dampferzeuger abgekühlte Synthesegas (**6a**) strömt durch zwei weitere Wärmetauscher als Vorerhitzer (**13,14**), die zum Vorerhitzen des Kesselspeisewassers (**8**) und des Prozesskondensates (**11**) dienen. Nach Durchströmen dieser Wärmetauscher (**13,14**) gelangt das Synthesegas (**6**) in eine Abkühlungsstrecke (**12**), in der das Synthesegas (**6a**) herunterkühlt oder heruntergekühlt wird, so dass das darin enthaltene Wasser (**11a**) auskondensiert. Das kondensierte Wasser (**11a**) wird als Prozesskondensat (**11**) weiterverwendet. Man erhält am Austritt das gekühlte, getrocknete Synthesegas (**6b**). Das Prozesskondensat (**11**) wird über einen Wärmetauscher (**15**) durch den Rauchgaskanal (**16**) geleitet, so dass sich dieses weiter aufheizt. Die Dampftrommel (**11a**) für das Prozesskondensat (**11**) wird ebenfalls über einen Wärmetauscher (**18**) durch das Rauchgas (**17**) aufgeheizt. Man erhält Dampf aus Kesselspeisewasser (**8a**) und Prozesskondensat (**11b**).

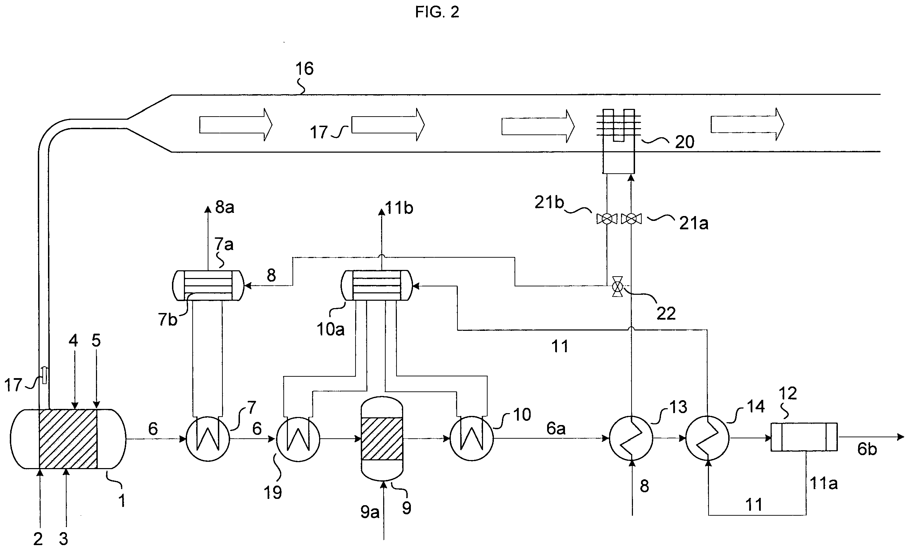

FIG. 2 zeigt eine erfindungsgemäße Vorrichtung, welche ebenfalls einen Reformierreaktor (**1**) enthält, der Synthesegas (**6**) produziert und dieses in eine Hochtemperaturkonvertierungseinheit (**9**) führt. Die Wärme des produzierten Synthesegases (**6**) wird auch hier vor der Hochtemperaturkonvertierungseinheit (**9**) zum Erhitzen eines Dampferzeugers (**7a**) über einen Wärmetauscher (**7**) für Kesselspeisewasser (**8**) genutzt. Erfindungsgemäß wird die Wärme des Synthesegases (**6**) vor der Hochtemperaturkonvertierungseinheit (**9**) zusätzlich zum Erhitzen mit dem Wärmetauscher (**19**) eines Dampferzeugers (**10a**) für das Prozesskondensat (**11**) genutzt. Das Synthesegas wird nach dem Durchströmen der Hochtemperaturkonvertierungseinheit (**9**) einen weiteren Wärmetauscher (**10**) zum Erhitzen des Dampferzeugers des Prozesskondensates (**11**) und zwei weitere Vorerhitzer (**13,14**), die zum Vorerhitzen des Kesselspeisewassers (**11**) und des Prozesskondensates (**8**) dienen. Das Prozesskondensat (**8**) lässt sich durch einen weiteren Wärmetauscher (**20**) im Rauchgaskanal (**16**) durch das Rauchgas (**17**) zum Erhitzen des Kesselspeisewassers (**1**) nutzen. Dieser Wärmetauscher (**20**) ist durch Ventile (**21a,21b**) absperrbar und durch ein BypassVentil (**22**) zu überbrücken, so dass der Wärmetauscher (**20**) je nach Bedarf an produziertem Dampf und Auslastung des Reformierreaktors (**1**) genutzt werden kann. Die Wärmetauscher zur Erhitzen und Verdampfen des Prozesskondensates (**10,19**) können als Kettlereboiler ausführt sein. Die Vorerhitzer (**13**) und (**14**) können auch in umgekehrter Reihenfolge vom Synthesegas (**6a**) durchströmt werden.

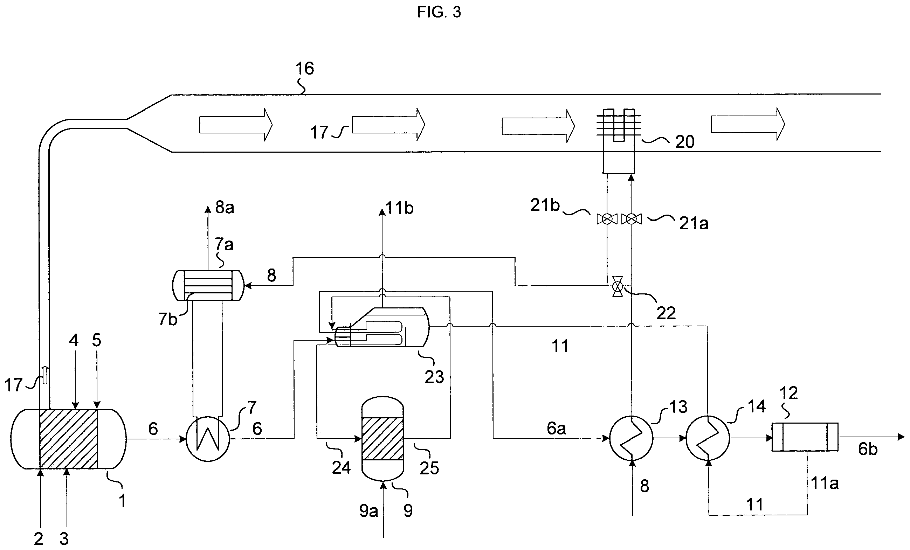

FIG. 3 zeigt die gleiche Ausführungsform, in der der Dampferzeuger (**19**) und der Wärmetauscher (**10**) mit Dampftrommel (**10b**) für das Prozesskondensat (**11**) gegen einen Kettlereboiler **(23**) ausgetauscht wurde. Das Synthesegas (**6**), welches den Dampferzeuger (**19**) für das Kesselspeisewasser (**8**) verlässt, wird in den Kettlereboiler (**23**) geleitet. Dort wird es erhitzt und über eine Eingangsleitung (**24**) in die CO-Konvertierungseinheit (**9**) geleitet. Von dort kommend wird es über eine Ausgangsleitung (**25**) durch denselben Kettlereboiler (**23**) geleitet, so dass es von dort kommend die gleiche Temperatur besitzt wie vor der CO-Konvertierung.

### Bezugszeichenliste

- 1: Reformierreaktor
- 2: Kohlenwasserstoff
- 3: Wasserdampf
- 4: Heizgas
- 5: Sauerstoffhaltiges Gas
- 6: Synthesegas
- 6a: Heruntergekühltes Synthesegas
- 6b: Heruntergekühltes, getrocknetes Synthesegas
- 7: Wärmetauscher für Dampferzeuger für Kesselspeisewasser
- 7a: Dampferzeuger für Kesselspeisewasser
- 7b: Dampftrommel
- 8: Kesselspeisewasser
- 8a: Dampf aus Kesselspeisewasser
- 9: Hochtemperaturkonversionseinheit
- 9a: Wasserdampf für CO-Konvertierung
- 10: Wärmetauscher für Dampferzeuger für Prozesskondensat
- 10a: Dampferzeuger für Prozesskondensat
- 10b: Dampftrommel
- 11: Prozesskondensat
- 11a: Kondensiertes Wasser aus Synthesegas
- 11b: Dampf aus Prozesskondensat
- 12: Abkühlungsstrecke
- 13: Vorerhitzer zum Vorerhitzen des Kesselspeisewassers
- 14: Vorerhitzer zum Vorerhitzen des Prozesskondensates
- 15: Wärmetauscher zum Erhitzen des Prozesskondensats im Rauchgaskanal
- 16: Rauchgaskanal
- 17: Rauchgas
- 18: Wärmetauscher zum Erhitzen des Dampferzeugers für Prozesskondensat
- 19: Wärmetauscher zum Erhitzen des Prozesskondensates vor der Hochtemperaturkonversionseinheit
- 20: Wärmetauscher im Rauchgaskanal zum Erhitzen des Kesselspeisewassers
- 21a, 21b: Ventile zum Absperren des Wärmetauschers im Rauchgaskanal
- 22: Bypassventil für Wärmetauscher im Rauchgaskanal
- 23: Kettlereboiler
- 24: Eingangsleitung in CO-Konvertierung
- 25: Ausgangsleitung von CO-Konvertierung

## Patentansprüche

1. Verfahren zur Erzeugung von Prozessdampf (11b) und Kesselspeisewasserdampf (8a) in einem beheizbaren Reformierreaktor zur Herstellung von Synthesegas, wobei
• das Verfahren Synthesegas (6) durch Dampfreformierung aus Kohlenwasserstoffen (2) und Dampf (3) bereitstellt, welches durch Verbrennung eines Heizgases (4) mit einem sauerstoffhaltigen Gas (5) beheizt wird, und das erzeugte Synthesegas (6) nach der Abkühlung durch eine Reihe von Wärmetauschern (10, 13, 14) und eine Abkühlungsstrecke (12) auskondensiert wird, so dass man neben dem getrockneten Synthesegas (6b) ein Prozesskondensat (11) erhält, und
• das Verfahren auch eine Konvertierung wenigstens eines Teiles des erzeugten Kohlenmonoxids mit Wasserdampf (9a) zu Kohlendioxid und Wasserstoff vornimmt, und
• der Dampf (8a, 11b) in zwei verschiedenen Sorten bereitgestellt wird, welche aus der Verdampfung von Kesselspeisewasser (8) und der Verdampfung von Prozesskondensat (11) erzeugt werden, und
• das Kesselspeisewasser (8) über einen Vorerhitzer (13), der sich im Gasfluß hinter der Konvertierungseinheit (9) befindet, mit dem Synthesegas (6) erhitzt wird, und das Kesselspeisewasser (8) dann über einen Dampferzeuger (7a), der sich im Gasfluß vor der Konvertierungseinheit (9) befindet, verdampft wird, und
• das Prozesskondensat (11) durch einen Wärmetauscher (10) und einen Vorerhitzer (14), die sich im Gasfluß hinter der Konvertierungseinheit (9) befinden, erhitzt wird,
**dadurch gekennzeichnet, dass**
• das Prozesskondensat (11) durch einen zusätzlichen Dampferzeuger (10a), der sich vor der Konvertierungseinheit (9) befindet, verdampft wird.

2. Verfahren nach Anspruch 1, **dadurch gekennzeichnet, dass** das Kesselspeisewasser (8) permanent oder zeitweise über einen zusätzlichen Wärmetauscher (20) mit dem Rauchgas (16) erhitzt wird.

3. Verfahren nach einem der Ansprüche 1 oder 2, **dadurch gekennzeichnet, dass** die Dampferzeugungsleistung aus Kesselspeisewasser (8) durch eine Temperaturregelung des Dampferzeugers (7a) für Kesselspeisewasser (8) geregelt wird.

4. Verfahren nach einem der Ansprüche 1 bis 3, **dadurch gekennzeichnet, dass** der Dampferzeuger für Prozesskondensat (11) vor der CO-Konvertierung (9) ein Kettlereboiler (23) ist und das Synthesegas (6) durch diesen Kettlereboiler (23) strömt.

5. Verfahren nach einem der Ansprüche 1 bis 4, **dadurch gekennzeichnet, dass** der Wärmetauscher für Prozesskondensat (11) hinter der CO-Konvertierung (9) ein Kettlereboiler (23) ist und das Synthesegas (6) durch diesen Kettlereboiler (23) strömt.

6. Vorrichtung zur Erzeugung von Prozessdampf (11b) und Kesselspeisewasserdampf (8a) in einem beheizbaren Reformierreaktor zur Herstellung von Synthesegas, umfassend
• einen beheizbaren Reformierreaktor (1) zur Herstellung von Synthesegas (6) aus Kohlenwasserstoffen (2) und Wasserdampf (3),
• eine Konvertierungseinheit (9) für die Konvertierung von Kohlenmonoxid mit Wasserdampf (9a) zu Kohlendioxid,
• eine Abkühlungsstrecke (12) zur Kondensation von Prozesswasser (11a),
• zwei Vorerhitzer (13, 14) zum Erhitzen des Kesselspeisewassers (8) und des Prozesskondensates (11) mit Synthesegas (6a),
• einen zusätzlichen Wärmetauscher (10) zum Erhitzen des Prozesskondensates (11) mit Synthesegas (6), der in Gasflußrichtung des Synthesegases (6) direkt hinter der Konvertierungseinheit (9) sitzt,
• einen Dampferzeuger (7a), der in Gasflußrichtung des Synthesegases (6) vor der Konvertierungseinheit (9) sitzt, wobei dieser zur Erzeugung von Dampf (8a) aus Kesselspeisewasser (8) dient,
**dadurch gekennzeichnet, dass**
• die Vorrichtung einen Dampferzeuger (10a) enthält, der in Gasflußrichtung des Synthesegases (6) vor der Konvertierungseinheit (9) sitzt, wobei dieser zur Erzeugung von Dampf (11b) aus Prozesskondensat (11) dient.

7. Vorrichtung nach Anspruch 6, **dadurch gekennzeichnet, dass** diese einen zusätzlichen Wärmetauscher (20) zum Erhitzen von Kesselspeisewasser (8) im Rauchgaskanal (16) umfasst.

8. Vorrichtung nach Anspruch 7, **dadurch gekennzeichnet, dass** der zusätzliche Wärmetauscher (20) zum Erhitzen von Kesselspeisewasser (8) im Rauchgaskanal (16) absperrbar ist.

9. Vorrichtung nach einem der Ansprüche 6 bis 8, **dadurch gekennzeichnet, dass** die Synthesegasleitung (24) vor der CO-Konvertierung (9) einen Kettlereboiler (23) enthält.

10. Vorrichtung nach einem der Ansprüche 6 bis 8, **dadurch gekennzeichnet, dass** die Synthesegasleitung (25) hinter der CO-Konvertierung (9) einen Kettlereboiler (23) enthält.

11. Vorrichtung nach einem der Ansprüche 9 und 10, **dadurch gekennzeichnet, dass** die Synthesegasleitung (24, 25) einen Kettlereboiler (23) enthält, dessen Wärmeaustauschschlangen das Synthesegas (6) aus dem Gasfluß sowohl vor der CO-Konvertierung (9) als auch hinter der CO-Konvertierung (9) durchleiten.

12. Vorrichtung nach einem der Ansprüche 6 bis 11, **dadurch gekennzeichnet, dass** die Synthesegasleitung (6) mit einer absperrbaren Rohrleitung ausgestattet ist, die eine regelbare Umgehung des Dampferzeugers (7a) für das Kesselspeisewasser (8) in Gasflussrichtung vor der CO-Konvertierung (9) ermöglicht.

13. Vorrichtung nach einem der Ansprüche 6 bis 12, **dadurch gekennzeichnet, dass** die Synthesegasleitung (6) mit einer absperrbaren Rohrleitung ausgestattet ist, die eine regelbare Umgehung des Dampferzeugers (10a) für das Prozesskondensat (11) in Gasflussrichtung vor der CO-Konvertierung (9) ermöglicht.

14. Vorrichtung nach einem der Ansprüche 6 bis 13, **dadurch gekennzeichnet, dass** sich zwischen den Vorerhitzern (13, 14) für das Kesselspeisewasser (8) und das Prozesskondensat (11) eine Einheit zur Niedertemperatur-CO-Konvertierung befindet.

## Claims

1. Method for generating process steam (11b) and boiler feed water steam (8a) in a heatable reformer reactor for producing synthesis gas, wherein
• the method provides synthesis gas (6) by steam reforming from hydrocarbons (2) and steam (3), which synthesis gas is heated by combustion of a heating gas (4) with an oxygen-containing gas (5), and the generated synthesis gas (6) is condensed after being cooled by a series of heat exchangers (10, 13, 14) and a cooling section (12), with the result that, in addition to the dried synthesis gas (6b), a process condensate (11) is obtained, and
• the method also performs a conversion of at least part of the generated carbon monoxide with water steam (9a) into carbon dioxide and hydrogen, and
• the steam (8a, 11b) is provided in two different types, which are generated from the evaporation of boiler feed water (8) and the evaporation of process condensate (11), and
• the boiler feed water (8) is heated by the synthesis gas (6) via a pre-heater (13), which is situated downstream of the conversion unit (9) in the gas flow, and the boiler feed water (8) is then evaporated via a steam generator (7a), which is situated upstream of the conversion unit (9) in the gas flow, and
• the process condensate (11) is heated by way of a heat exchanger (10) and a pre-heater (14), which are situated downstream of the conversion unit (9) in the gas flow,
**characterized in that**
• the process condensate (11) is evaporated by an additional steam generator (10a), which is situated upstream of the conversion unit (9).

2. Method according to Claim 1, **characterized in that** the boiler feed water (8) is heated permanently or intermittently by the flue gas (16) via an additional heat exchanger (20).

3. Method according to either of Claims 1 and 2, **characterized in that** the capacity for generating steam from boiler feed water (8) is regulated by temperature regulation of the steam generator (7a) for boiler feed water (8).

4. Method according to one of Claims 1 to 3, **characterized in that** the steam generator for process condensate (11) upstream of the CO conversion unit (9) is a kettle reboiler (23), and the synthesis gas (6) flows through said kettle reboiler (23).

5. Method according to one of Claims 1 to 4, **characterized in that** the heat exchanger for process condensate (11) downstream of the CO conversion unit (9) is a kettle reboiler (23), and the synthesis gas (6) flows through said kettle reboiler (23).

6. Device for generating process steam (11b) and boiler feed water steam (8a) in a heatable reformer reactor for producing synthesis gas, comprising
• a heatable reformer reactor (1) for producing synthesis gas (6) from hydrocarbons (2) and water steam (3),
• a conversion unit (9) for converting carbon monoxide with water steam (9a) into carbon dioxide,
• a cooling section (12) for condensing process water (11a),
• two pre-heaters (13, 14) for heating the boiler feed water (8) and the process condensate (11) by way of synthesis gas (6a),
• an additional heat exchanger (10) for heating the process condensate (11) by way of synthesis gas (6), which heat exchanger is situated directly downstream of the conversion unit (9) in the gas flow direction of the synthesis gas (6),
• a steam generator (7a) which is situated upstream of the conversion unit (9) in the gas flow direction of the synthesis gas (6), wherein said steam generator serves for generating steam (8a) from boiler feed water (8),
**characterized in that**
• the device contains a steam generator (10a) which is situated upstream of the conversion unit (9) in the gas flow direction of the synthesis gas (6), wherein said steam generator serves for generating steam (11b) from process condensate (11).

7. Device according to Claim 6, **characterized in that** it comprises an additional heat exchanger (20) for heating boiler feed water (8) in the flue gas channel (16).

8. Device according to Claim 7, **characterized in that** the additional heat exchanger (20) for heating boiler feed water (8) in the flue gas channel (16) is able to be shut off.

9. Device according to one of Claims 6 to 8, **characterized in that** the synthesis gas line (24) upstream of the CO conversion unit (9) contains a kettle reboiler (23).

10. Device according to one of Claims 6 to 8, **characterized in that** the synthesis gas line (25) downstream of the CO conversion unit (9) contains a kettle reboiler (23).

11. Device according to either of Claims 9 and 10, **characterized in that** the synthesis gas line (24, 25) contains a kettle reboiler (23) whose heat exchange coils conduct the synthesis gas (6) both upstream of the CO conversion unit (9) and downstream of the CO conversion unit (9) from the gas flow.

12. Device according to one of Claims 6 to 11, **characterized in that** the synthesis gas line (6) is equipped with a pipeline which is able to be shut off and which allows regulable bypass of the steam generator (7a) for the boiler feed water (8) upstream of the CO conversion unit (9) in the gas flow direction.

13. Device according to one of Claims 6 to 12, **characterized in that** the synthesis gas line (6) is equipped with a pipeline which is able to be shut off and which allows regulable bypass of the steam generator (10a) for the process condensate (11) upstream of the CO conversion unit (9) in the gas flow direction.

14. Device according to one of Claims 6 to 13, **characterized in that** a unit for low-temperature CO conversion is situated between the pre-heaters (13, 14) for the boiler feed water (8) and for the process condensate (11).

## Revendications

1. Procédé de production de vapeur de processus (11b) et de vapeur d'eau d'alimentation de chaudière (8a) dans un réacteur de reformage chauffant pour la production de gaz de synthèse, dans lequel
• le procédé fournit un gaz de synthèse (6) par reformage à la vapeur à partir d'hydrocarbures (2) et de vapeur (3), que l'on chauffe par combustion d'un gaz de chauffage (4) avec un gaz contenant de l'oxygène (5), et on condense le gaz de synthèse produit (6) après le refroidissement par une série d'échangeurs de chaleur (10, 13, 14) et une section de refroidissement (12), de façon à obtenir un condensat de processus (11) en plus du gaz de synthèse séché (6b), et
• le procédé opère également une conversion d'au moins une partie du monoxyde de carbone produit avec de la vapeur d'eau (9a) en dioxyde de carbone et hydrogène, et
• on fournit la vapeur (8a, 11b) sous deux types différents, que l'on produit par la vaporisation d'eau d'alimentation de chaudière (8) et la vaporisation de condensat de processus (11), et
• on chauffe l'eau d'alimentation de chaudière (8) au moyen d'un préchauffeur (13), qui se trouve dans le flux de gaz après l'unité de conversion (9), avec le gaz de synthèse (6), et on vaporise ensuite l'eau d'alimentation de chaudière (8) au moyen d'un générateur de vapeur (7a), qui se trouve dans le flux de gaz avant l'unité de conversion (9), et
• on chauffe le condensat de processus (11) au moyen d'un échangeur de chaleur (10) et d'un préchauffeur (14), qui se trouvent dans le flux de gaz après l'unité de conversion (9),
**caractérisé en ce que**
• on vaporise le condensat de processus (11) au moyen d'un générateur de vapeur supplémentaire (10a), qui se trouve avant l'unité de conversion (9).

2. Procédé selon la revendication 1, **caractérisé en ce que** l'on chauffe l'eau d'alimentation de chaudière (8) de façon permanente ou temporaire au moyen d'un échangeur de chaleur supplémentaire (20) avec le gaz de fumée (16).

3. Procédé selon une des revendications 1 ou 2, **caractérisé en ce que** l'on règle la capacité de production de vapeur à partir d'eau d'alimentation de chaudière (8) par une régulation de la température du générateur de vapeur (7a) pour l'eau d'alimentation de chaudière (8).

4. Procédé selon l'une quelconque des revendications 1 à 3, **caractérisé en ce que** le générateur de vapeur pour le condensat de processus (11) avant la conversion de CO (9) est un rebouilleur (23) et le gaz de synthèse (6) s'écoule à travers ce rebouilleur (23).

5. Procédé selon l'une quelconque des revendications 1 à 4, **caractérisé en ce que** l'échangeur de chaleur pour condensat de processus (11) après la conversion de CO (9) est un rebouilleur (23) et le gaz de synthèse (6) s'écoule à travers ce rebouilleur (23).

6. Dispositif de production de vapeur de processus (11b) et de vapeur d'eau d'alimentation de chaudière (8a) dans un réacteur de reformage chauffant pour la production de gaz de synthèse, comprenant
• un réacteur de reformage chauffant (1) pour la production de gaz de synthèse (6) à partir d'hydrocarbures (2) et de vapeur d'eau (3),
• une unité de conversion (9) pour la conversion de monoxyde de carbone avec de la vapeur d'eau (9a) en dioxyde de carbone,
• une section de refroidissement (12) pour la condensation d'eau de processus (11a),
• deux préchauffeurs (13, 14) pour le chauffage de l'eau d'alimentation de chaudière (8) et du condensat de processus (11) avec du gaz de synthèse (6a),
• un échangeur de chaleur supplémentaire (10) pour chauffer le condensat de processus (11) avec du gaz de synthèse (6), qui est placé dans la direction du flux de gaz du gaz de synthèse (6) directement après l'unité de conversion (9),
• un générateur de vapeur (7a), qui est placé dans la direction du flux de gaz du gaz de synthèse (6) avant l'unité de conversion (9), dans lequel celui-ci sert pour la production de vapeur (8a) à partir d'eau d'alimentation de chaudière (8),
**caractérisé en ce que**
• le dispositif comporte un générateur de vapeur (10a), qui est placé dans la direction du flux de gaz du gaz de synthèse (6) avant l'unité de conversion (9), dans lequel celui-ci sert pour la production de vapeur (11b) à partir de condensat de processus (11).

7. Dispositif selon la revendication 6, **caractérisé en ce qu'**il comprend un échangeur de chaleur supplémentaire (20) pour le chauffage d'eau d'alimentation de chaudière (8) dans le conduit de fumée (16).

8. Dispositif selon la revendication 7, **caractérisé en ce que** l'échangeur de chaleur supplémentaire (20) pour le chauffage d'eau d'alimentation de chaudière (8) peut être fermé dans le conduit de fumée (16).

9. Dispositif selon l'une quelconque des revendications 6 à 8, **caractérisé en ce que** la conduite de gaz de synthèse (24) avant la conversion de CO (9) comporte un rebouilleur (23).

10. Dispositif selon l'une quelconque des revendications 6 à 8, **caractérisé en ce que** la conduite de gaz de synthèse (25) après la conversion de CO (9) comporte un rebouilleur (23).

11. Dispositif selon une des revendications 9 et 10, **caractérisé en ce que** la conduite de gaz de synthèse (24, 25) comporte un rebouilleur (23), dont les boucles d'échange de chaleur conduisent le gaz de synthèse (6) hors du flux de gaz aussi bien avant la conversion de CO (9) qu'après la conversion de CO (9).

12. Dispositif selon l'une quelconque des revendications 6 à 11, **caractérisé en ce que** la conduite de gaz de synthèse (6) est équipée d'une canalisation pouvant être fermée, qui permet un contournement réglable du générateur de chaleur (7a) pour l'eau d'alimentation de chaudière (8) dans la direction du flux de gaz avant la conversion de CO (9).

13. Dispositif selon l'une quelconque des revendications 6 à 12, **caractérisé en ce que** la conduite de gaz de synthèse (6) est équipée d'une canalisation pouvant être fermée, qui permet un contournement réglable du générateur de vapeur (10a) pour le condensat de processus (11) dans la direction du flux de gaz avant la conversion de CO (9).

14. Dispositif selon l'une quelconque des revendications 6 à 13, **caractérisé en ce qu'**il se trouve entre les préchauffeurs (13, 14) pour l'eau d'alimentation de chaudière (8) et le condensat de processus (11) une unité pour la conversion de CO à basse température.
